# EUROPÄISCHE PATENTSCHRIFT

(11) **EP 3 095 661 B1**
(45) Veröffentlichungstag und Bekanntmachung des Hinweises auf die Patenterteilung: **07.02.2024**
(21) Anmeldenummer: 16001007.0
(22) Anmeldetag: 04.05.2016
(51) Int. Cl.: B60W 30/14, B60W 10/06, B60W 30/18, B60W 50/00, B60W 30/16, G08G 1/00

(54) **VERFAHREN UND VORRICHTUNG ZUR UNTERSTÜTZUNG EINES FAHRERS EINES FAHRZEUGS, INSBESONDERE EINES NUTZFAHRZEUGS**
DEVICE AND METHOD FOR SUPPORTING A DRIVER OF A VEHICLE, IN PARTICULAR A COMMERCIAL VEHICLE
PROCÉDÉ ET DISPOSITIF D'ASSISTANCE D'UN CONDUCTEUR DE VÉHICULE AUTOMOBILE, EN PARTICULIER D'UN VÉHICULE UTILITAIRE

(30) Priorität: 19.05.2015 DE 102015006445
(43) Veröffentlichungstag der Anmeldung: 23.11.2016
(73) Patentinhaber: MAN Truck & Bus SE, 80995 München (DE)
(72) Erfinder: Dörner, Karlheinz, 85757 Karlsfeld (DE); Zimmermann, Andreas, 80995 München (DE); Heyes, Daniel, 81247 München (DE); Jerg, Stefan, 80805 München (DE)
(74) Vertreter: Liebl, Thomas

(56) Entgegenhaltungen:
- EP-A1- 2 243 675
- WO-A1-2010/144031
- WO-A1-2012/014040
- DE-A1-102004 017 115
- DE-A1-102008 019 174
- US-A1- 2013 041 567

## Beschreibung

Die Erfindung betrifft ein Verfahren zur Unterstützung eines Fahrers eines Fahrzeugs, insbesondere eines Nutzfahrzeugs, nach dem Oberbegriff des Patentanspruches 1, eine Vorrichtung zur Unterstützung eines Fahrzeugs, insbesondere eines Nutzfahrzeugs, nach dem Oberbegriff des Patentanspruches 12, sowie ein Fahrzeug, insbesondere ein Nutzfahrzeug, zur Durchführung des Verfahrens und/oder mit der Vorrichtung nach Patentanspruch 13.

Es ist bekannt, ein Fahrzeug mit einer Regel- und/oder Steuereinrichtung vorzusehen, mittels der die Geschwindigkeit des Fahrzeugs selbsttätig bzw. automatisch geregelt bzw. gesteuert werden kann. Die Geschwindigkeit des Fahrzeugs kann dabei beispielsweise derart geregelt bzw. gesteuert werden, dass das Fahrzeug stets einen definierten Abstand zu ei- , nem vor dem Fahrzeug auf derselben Fahrspur fahrenden Vorderfahrzeug aufweist. Eine derart ausgebildete Regel- und/oder Steuereinrichtung wird häufig auch als Abstandsregeltempomat bezeichnet. Ein gattungsgemässes Verfahren und Fahrzeug zeigt die DE102004017115A.

Aufgabe der Erfindung ist es, ein Verfahren und eine Vorrichtung zur Unterstützung eines Fahrzeugs, insbesondere eines Nutzfahrzeugs, bereitzustellen, mittels denen das Fahrzeug besonders energiesparend betrieben werden kann.

Diese Aufgabe wird durch die Merkmale der unabhängigen Ansprüche gelöst. Bevorzugte Weiterbildungen sind in den Unteransprüchen offenbart.

Gemäß Patentanspruch 1 wird ein Verfahren zur Unterstützung eines Fahrers eines Fahrzeugs, insbesondere eines Nutzfahrzeugs mit den Merkmalen des Anspruchs 1 vorgeschlagen.

Auf diese Weise wird das Fahrzeug energiesparend betrieben, da die Antriebseinrichtung nicht kontinuierlich im ineffizienten Teillastbereich angesteuert wird, sondern während des Beschleunigungsschritts mit im Wesentlichen maximalem Wirkungsgrad arbeitet. Während des Verzögerungsschritts kann das Fahrzeug dann beispielsweise ausrollen bzw. "segeln", bis es die Minimalgeschwindigkeit bzw. den Minimalgeschwindigkeits-Wert unterschreitet, Beim Unterschreiten der Minimalgeschwindigkeit wird das Fahrzeug dann wieder mit maximalem Wirkungsgrad beschleunigt, bis die Maximalgeschwindigkeit bzw. der Maximalgeschwindigkeits-Wert überschritten wird. Bei schweren Fahrzeugen, insbesondere bei vollbeladenen Lastkraftwagen, hat sich die erfindungsgemäße Verfahrensführung dabei als besonders effektiv bzw. als besonders energiesparend erwiesen. Durch die selbsttätige bzw. automatische Regelung und/oder Steuerung der Fahrzeuggeschwindigkeit ist es zudem möglich, das vorhandene Energie-Einsparpotential stets möglichst vollständig auszunutzen, ohne den Fahrer abzulenken bzw. den Fahrerkomfort zu verringern. Des Weiteren wird durch die Einstellung bzw. Verstellung der Maximalgeschwindigkeit und/oder der Minimalgeschwindigkeit in Abhängigkeit von wenigstens einem Straßen- und/oder Verkehrsparameter sichergestellt, dass durch die Anwendung des erfindungsgemäßen Verfahrens der Straßenverkehr nicht behindert bzw. gestört wird. Vielmehr kann nun beispielsweise der Umgebungsverkehr des Fahrzeugs bei dieser energiesparenden Fahrstrategie berücksichtigt werden.

Die Begrifflichkeit "maximaler Wirkungsgrad" ist bei einer als Brennkraftmaschine ausgebildeten Antriebseinrichtung derart zu verstehen, dass in Abhängigkeit von der aktuellen Drehzahl der Brennkraftmaschine stets der maximal mögliche Brennkraftmaschinen-Wirkungsgrad eingestellt wird. Dieser maximal mögliche Wirkungsgrad kann je nach Drehzahl der Brennkraftmaschine variieren bzw. unterschiedlich sein.

Weiter bevorzugt wird in dem Grundmodus mittels einer Geschwindigkeits-Anzeigeeinrichtung des Fahrzeugs dem Fahrer eine Änderung der Fahrzeuggeschwindigkeit mit verringerter Auflösung angezeigt als für den Fall, dass sich das Fahrzeug nicht in dem Grundmodus befindet. Auf diese Weise wird der Fahrerkomfort weiter erhöht, da der Fahrer somit während des Grundmodus Geschwindigkeitsänderungen bzw. Geschwindigkeitsschwankungen weniger wahrnehmen bzw. erfassen kann. Die Anzeige mit verringerter Auflösung kann beispielsweise durch Filterung der Eingangssignale der Geschwindigkeits-Anzeigeeinrichtung erfolgen.

Vorzugsweise wird während des Verzögerungschritts die als Brennkraftmaschine ausgebildete Antriebseinrichtung im Schubbetrieb betrieben. So kann das Fahrzeug während des Verzögerungsschritts besonders energiesparend betrieben werden.

Weiter bevorzugt ist wenigstens eine Kupplungseinrichtung vorgesehen, mittels der die Antriebseinrichtung lösbar mit wenigstens einer Antriebswelle des Fahrzeugs verbunden werden kann. Während des Verzögerungsschritts kann die Verbindung zwischen der Antriebseinrichtung und der Antriebswelle dann gelöst sein. Während des Beschleunigungsschritt kann die Verbindung zwischen der Antriebseinrichtung und der Antriebswelle wieder hergestellt sein. Auf diese Weise kann ein energiesparender Betrieb des Fahrzeugs während des Verzögerungsschritts besonders einfach und effektiv realisiert werden, da die Antriebseinrichtung während des Verzögerungsschritts nun nicht mit der Antriebswelle gekoppelt ist.

Besonders bevorzugt wird dann während des Verzögerungsschritts die als Brennkraftmaschine ausgebildete Antriebseinrichtung mit Leerlaufdrehzahl betrieben, um auf einfache und effektive Weise einen energiesparenden Betrieb des Fahrzeugs während des Verzögerungsschritts zu realisieren. Alternativ und/oder zusätzlich kann während des Verzögerungsschritts die Antriebseinrichtung auch ausgeschaltet werden, um das Fahrzeug während des Verzögerungsschritts besonders energiesparend zu betreiben.

In einer weiteren bevorzugten Verfahrensführung ist der wenigstens eine Straßen- und/oder Verkehrsparameter durch den Abstand des Fahrzeugs zu wenigstens einem vor dem Fahrzeug auf derselben Fahrspur fahrenden Vorderfahrzeug und/oder zu wenigstens einem hinter dem Fahrzeug auf derselben Fahrspur fahrenden Hinterfahrzeug gebildet. Mittels eines derart ausgebildeten Straßen- und/oder Verkehrsparameters kann eine Behinderung bzw. eine Störung des Straßenverkehrs besonders einfach und effektiv verhindert werden. Die Messung des Abstands zu dem Vorderfahrzeug und/oder zu dem Hinterfahrzeug kann dabei mittels bekannter Abstand-Erfassungseinrichtungen, beispielsweise mittels Radar-, Kamera- oder Lidarsensoren, erfolgen. Zur Ermittlung des Abstands zwischen dem Fahrzeug und dem Hinterfahrzeug bzw. dem nachfolgenden Fahrzeug werden als Abstand-Erfassungseinrichtungen vorzugsweise seitlich am Fahrzeug angeordnete Kamerasysteme verwendet. Alternativ und/oder zusätzlich kann der Abstand auch durch "car-to-carcommunication" bzw. durch Übertragung von mittels des Hinterfahrzeugs ermittelten Abstandsdaten vom Hinterfahrzeug an das Fahrzeug ermittelt werden.

Weiter bevorzugt Ist der wenigstens eine Straßen- und/oder Verkehrsparameter durch die Geschwindigkeit und/oder durch die Beschleunigung wenigstens eines vor dem Fahrzeug auf derselben Fahrspur fahrenden Vorderfahrzeugs und/oder wenigstens eines hinter dem Fahrzeug auf derselben Fahrspur fahrenden Hinterfahrzeugs gebildet. Mittels derartiger Straßen- und/oder Verkehrsparameter kann eine Behinderung des Straßenverkehrs ebenfalls einfach und zuverlässig verhindert werden.

Weiter bevorzugt ist der wenigstens eine Straßen- und/oder Verkehrsparameter durch wenigstens ein die Fahrzeuggeschwindigkeit beeinflussendes Straßen- und/oder Verkehrsereignis auf der Fahrstrecke des Fahrzeugs gebildet, das zukünftig mit dem Fahrzeug erreicht wird. Auf diese Weise kann das Fahrzeug besonders energiesparend betrieben werden, da bei der erfindungsgemäßen Regelung bzw. Steuerung der Fahrzeuggeschwindigkeit nun auch zukünftige Straßen- und/oder Verkehrsereignisse berücksichtigt werden. Die Maximalgeschwindigkeit und/oder die Minimalgeschwindigkeit können dann unter Berücksichtigung der zukünftigen Straßen- und/oder Verkehrsereignisse bereits frühzeitig bzw. vor dem Erreichen der zukünftigen Straßen- und/oder Verkehrsereignisse derart eingestellt bzw. verstellt werden, dass möglichst viel Antriebsenergie eingespart werden kann. Das wenigstens eine zukünftige Straßen- und/oder Verkehrsereignis kann dabei beispielsweise durch eine vorausliegende Geschwindigkeitsbegrenzung und/oder durch vorausliegende geschwindigkeitsbegrenzende Kurvenradien der Fahrstrecke oder durch vorausliegende Verkehrsstörungen, bei denen die Fahrzeuggeschwindigkeit verringert werden muss, gebildet sein. Die voraussichtliche Fahrroute des Fahrzeugs kann dabei beispielsweise mittels Informationen über die Häufigkeit, in der bestimmte Fahrrouten gefahren werden, mittels Routendaten eines Navigationssystems des Fahrzeugs oder mittels Informationen über die Straßenkategorie bestimmt werden. Alternativ und/oder zusätzlich kann der wenigstens eine Straßen- und/oder Verkehrsparameter auch durch wenigstens eine Straßenverkehrsvorschrift gebildet sein. Eine derartige Straßenverkehrsvorschrift kann beispielsweise ein Überhohlverbot sein. Die wenigstens eine Straßenverkehrsvorschrift kann dabei beispielsweise mittels einer fahrzeugseitigen Sensorik oder mittels Georeferenzierung erfasst werden.

Besonders bevorzugt ist der wenigstens eine Straßen- und/oder Verkehrsparameter durch die Steigung der Fahrzeug-Fahrbahn gebildet. Die Steigung der Fahrzeug-Fahrbahn hat einen wesentlichen Einfluss auf die Effektivität des erfindungsgemäßen Verfahrens. Sofern eine Steigung der Fahrzeug-Fahrbahn beispielsweise geringer ist als ein definierter positiver Steigungswert, wird der Differenzwert zwischen der Maximalgeschwindigkeit und der Minimalgeschwindigkeit vorzugsweise größer eingestellt als für den Fall, dass die Steigung der Fahrzeug-Fahrbahn größer ist als der definierte positive Steigungswert. Ebenso kann, sofern eine Steigung der Fahrzeug-Fahrbahn beispielsweise größer ist als ein definierter negativer Steigungswert, der Differenzwert zwischen der Maximalgeschwindigkeit und der Minimalgeschwindigkeit größer eingestellt werden als für den Fall, dass die Steigung der Fahrzeug-Fahrbahn kleiner ist als der definierte negative Steigungswert.

In einer weiteren bevorzugten Verfahrensführung wird, sofern sich die Fahrzeuggeschwindigkeit während des Einschaltens des Grundmodus zwischen der Maximalgeschwindigkeit und der Minimalgeschwindigkeit befindet, mittels der Regel- und/oder Steuereinrichtung der Beschleunigungsschritt ausgeführt.

Vorzugsweise wird, sofern während des Einschaltens des Grundmodus ein Abstands des Fahrzeugs zu einem unmittelbar vor dem Fahrzeug auf derselben Fahrspur vorhandenen Vorderfahrzeug geringer ist als ein definierter Abstands-Wert, vor dem ersten Verzögerungsschritt und dem ersten Beschleunigungsschritt zunächst ein Abstand-Einstellschritt durchgeführt, in dem mittels der Regel- und/oder Steuereinrichtung bis zum Erreichen des definierten Abstand-Werts die Fahrzeuggeschwindigkeit verringert wird. Auf diese Weise wird sichergestellt, dass das Fahrzeug während der erfindungsgemäßen Regelung bzw. Steuerung der Fahrzeuggeschwindigkeit einen ausreichenden Abstand zu dem Vorderfahrzeug aufweist.

Besonders bevorzugt werden in dem Grundmodus der Verzögerungsschritt und der Beschleunigungsschritt abwechselnd hintereinander ausgeführt. Das Fahrzeug weist dann bei Durchlaufen eines Verzögerungsschritts und eines Beschleunigungsschritts eine definierte Durchschnittsgeschwindigkeit auf.

Bevorzugt werden, sofern sich in einem definierten Nahbereich im Bereich des Fahrzeugs, beispielsweise in einem Bereich mit einem Radius von 100 Meter um das Fahrzeug, kein vor dem Fahrzeug auf der derselben Fahrspur fahrendes Vorderfahrzeug befindet, die Maximalgeschwindigkeit und die Minimalgeschwindigkeit derart eingestellt, dass die Durchschnittsgeschwindigkeit einer Fahrzeuggeschwindigkeit während des Einschaltens des Grundmodus und/oder einem vom Fahrer mittels einer Einstelleinrichtung eingestellten Sollgeschwindigkeits-Wert entspricht. Dadurch bewegt sich das Fahrzeug auch während der erfindungsgemäßen Regelung bzw. Steuerung der Fahrzeuggeschwindigkeit mit der vom Fahrer gewünschten Geschwindigkeit fort.

Alternativ und/oder zusätzlich können, sofern sich in einem definierten Nahbereich des Fahrzeugs ein vor dem Fahrzeug auf derselben Fahrspur fahrendes Fahrzeug befindet, die Maximalgeschwindigkeit und die Minimalgeschwindigkeit derart eingestellt werden, dass die Durchschnittsgeschwindigkeit und die Geschwindigkeit des Vorderfahrzeugs im Wesentlichen identisch sind. Auf diese Weise wird der Fahrerkomfort weiter erhöht.

Weiter bevorzugt wird, sofern sich in einem definierten Nahbereich des Fahrzeugs ein hinter dem Fahrzeug auf derselben Fahrspur fahrendes Hinterfahrzeug befindet, der Differenzwert zwischen der Maximalgeschwindigkeit und der Minimalgeschwindigkeit kleiner eingestellt als für den Fall, dass sich in dem definierten Nahbereich des Fahrzeugs kein Hinterfahrzeug befindet. Auf diese Weise wird zuverlässig sichergestellt, dass das Hinterfahrzeug nicht behindert bzw. gestört wird, wenn sich das Hinterfahrzeug in dem Nahbereich befindet.

Besonders bevorzugt wird die Maximalgeschwindigkeit und/oder die Minimalgeschwindigkeit in Abhängigkeit von dem wenigstens einen Straßen- und/oder Verkehrsparameter selbsttätig bzw. automatisch mittels der Regel- und/oder Steuereinrichtung eingestellt und/oder verstellt. Dadurch wird ein besonders hoher Komfort für den Fahrer des Fahrzeugs sichergestellt.

Bevorzugt wird dabei, sofern sich außerhalb eines definierten Nahbereichs im Bereich des Fahrzeugs ein hinter dem Fahrzeug auf derselben Fahrspur fahrendes Hinterfahrzeug befindet, der Differenzwert zwischen der Maximalgeschwindigkeit und der Minimalgeschwindigkeit in Abhängigkeit von dem Abstand des Fahrzeugs zu dem Hinterfahrzeug selbsttätig bzw. automatisch mittels der Regel- und/oder Steuereinrichtung eingestellt und/oder verstellt. So wird eine Behinderung des Hinterfahrzeugs zuverlässig vermieden.

Alternativ und/oder zusätzlich kann auch eine durch den Fahrer betätigbare Einstelleinrichtung vorgesehen sein, mittels der die Maximalgeschwindigkeit und/oder die Minimalgeschwindigkeit und/oder ein Differenzwert zwischen der Maximalgeschwindigkeit und der Minimalgeschwindigkeit eingestellt und/oder verstellt werden können. So kann der Fahrer die Maximalgeschwindigkeit und/oder die Minimalgeschwindigkeit seinen Bedürfnissen entsprechend einstellen bzw. verstellen.

Vorzugsweise kann mittels der Regel- und/oder Steuereinrichtung auch ein Steigungsverlauf eines vorausliegenden bzw. vor dem Fahrzeug liegenden Fahrstreckenabschnitts ermittelt werden. Dieser Steigungsverlauf kann dabei beispielsweise mittels einer digitalen Karte ermittelt werden, die beispielsweise in einer fahrzeugseitigen Speichereinrichtung oder in einer fahrzeugexternen Speichereinrichtung, beispielsweise in einem Server, abgespeichert sein kann. Bevorzugt schaltet die Regel- und/oder Steuereinrichtung dann bei wenigstens einer definierten vorausliegenden Steigungssituation selbsttätig bzw. automatisch in einen Steigungsmodus, in dem die Fahrzeuggeschwindigkeit in Abhängigkeit von dem Steigungsverlauf selbsttätig mittels der Regel- und/oder Steuereinrichtung geregelt und/oder gesteuert wird. Auf diese Weise kann das Fahrzeug besonders energiesparend betrieben werden, da bei der Regelung bzw. der Steuerung der Fahrzeuggeschwindigkeit nun auch der Steigungsverlauf der Fahrstrecke berücksichtigt wird. So kann beispielsweise bereits kurz vor einem Gefälle die Antriebsleistung zum Antreiben des Fahrzeugs verringert werden oder es können bereits vor dem Ende des Gefälles die Bremsen des Fahrzeugs gelöst werden. Vorzugsweise werden die Bremsen bei einem Lastkraftwagen dabei zu einem Zeitpunkt gelöst, bei dem gesetzlich vorgeschriebene Maximalzeiten einer Geschwindigkeitsüberhöhung nicht überschritten werden und gleichzeitig möglichst viel Antriebsenergie eingespart wird.

Bevorzugt ist wenigstens eine durch einen Fahrer des Fahrzeugs betätigbare Betätigungseinrichtung, insbesondere ein Taster und/oder ein Schalter, vorgesehen, durch deren Betätigung ein Effizienzmodus der Regel- und/oder Steuereinrichtung aktivierbar und/oder deaktivierbar ist, der aus dem beschriebenen Grundmodus und einem Wartemodus besteht. Aus dem Wartemodus wird in Abhängigkeit von wenigstens einem Straßen- und/oder Verkehrsparameter in den Grundmodus geschaltet, andernfalls ist der Wartemodus aktiv. Ein derartiger Straßen- und/oder Verkehrsparameter kann beispielsweise durch die Steigung der der vorausliegenden Fahrstrecke gebildet sein. Die Regel- und/oder Steuereinrichtung kann bei aktiviertem Effizienzmodus beispielsweise nur dann in den Grundmodus schalten, wenn die Steigung eines vor dem Fahrzeug liegenden Fahrstreckenabschnitts größer als ein definierter negativer Steigungs-Grenzwert und/oder kleiner als ein definierter positiver Steigungs-Grenzwert ist. Diese Steigungsgrenzwerte sind dabei keine festen Grenzwerte, sondern werden abhängig von der Motorleistung und der jeweiligen Gesamtmasse des Fahrzeugs von der Steuerung bestimmt, zum Beispiel indem sie aus einer gespeicherten Tabelle entnommen werden. Weiter kann der Beschleunigungsschritt im Grundmodus beispielsweise so frühzeitig beendet werden, dass am Beginn eines Gefälles die Minimalgeschwindigkeit vorliegt oder es kann vor dem Beginn eines Anstiegs der Verzögerungsschritt beendet und der Beschleunigungsschritt so rechtzeitig eingeleitet werden, dass am Beginn des Anstiegs die Maximalgeschwindigkeit erreicht wird, damit das Fahrzeug mit viel Schwung in die Steigung fährt.

Alternativ und/oder zusätzlich zu der Betätigungseinrichtung kann der Effizienzmodus auch in Abhängigkeit von der Betriebssituation des Fahrzeugs selbsttätig bzw. automatisch mittels der Regel- und/oder Steuereinrichtung aktiviert und/oder deaktiviert werden. Dadurch wird zuverlässig sichergestellt, dass der Effizienzmodus dann aktiviert oder deaktiviert wird, wenn dies sinnvoll ist. Beispielsweise kann der Effizienzmodus selbsttätig mittels der Regelund/oder Steuereinrichtung eingeschaltet werden, wenn die Zündung des Fahrzeugs eingeschaltet bzw. wenn die Regel- und/oder Steuereinrichtung aktiviert wird.

In einer weiteren bevorzugten Verfahrensführung befindet sich das Fahrzeug in einem Fahrzeugverbund aus mehreren auf einer Fahrspur hintereinander fahrenden Fahrzeugen, wobei jedes dieser Fahrzeuge die Regel- und/oder Steuereinrichtung aufweist und zumindest ein Teil dieser Regel- und/oder Steuereinrichtungen signaltechnisch miteinander verbunden sind. Die Regel- und/oder Steuereinrichtung desjenigen Fahrzeugs des Fahrzeugverbunds, dessen Fahrzeuggeschwindigkeit sich während des Verzögerungsschritts am langsamsten verringert, schaltet dann selbsttätig bzw. automatisch in den Grundmodus. Während des Verzögerungsschritts wird dann die Geschwindigkeit des wenigstens einen weiteren Fahrzeugs des Fahrzeugverbunds an die Geschwindigkeit des Fahrzeugs mit der in den Grundmodus geschalteten Regel- und/oder Steuereinrichtung angepasst. So kann die erfindungsgemäße Regelung bzw. Steuerung der Fahrzeuggeschwindigkeit auf einfache Weise auf einen ganzen Fahrzeugverbund übertragen werden. Dadurch, dass lediglich die Regelund/oder Steuereinrichtung desjenigen Fahrzeugs des Fahrzeugverbunds, dessen Fahrzeuggeschwindigkeit sich während des Verzögerungsschritts am langsamsten verringert, in den Grundmodus geschaltet wird, wird zudem ein besonders energiesparender Betrieb des Fahrzeugverbunds realisiert.

Bevorzugt schaltet die Regel- und/oder Steuereinrichtung des vordersten Fahrzeugs des Fahrzeugverbunds spätestens nach der Durchführung des Verzögerungsschritts ebenfalls selbsttätig in den Grundmodus. Während des Beschleunigungsschritts wird dann die Geschwindigkeit des wenigstens einen hinter dem vordersten Fahrzeug fahrenden Fahrzeugs an die Geschwindigkeit des vordersten Fahrzeugs angepasst. Auf diese Weise kann ein vor dem Fahrzeugverbund auf derselben Fahrspur fahrendes Vorderfahrzeug auf besonders einfache Weise bei der erfindungsgemäßen Regelung bzw. Steuerung der Fahrzeuggeschwindigkeit berücksichtigt werden.

Weiter bevorzugt wird, sofern der Grundmodus der Regel- und/oder Steuereinrichtungen nicht aktiviert ist, die Geschwindigkeit des wenigstens einen hinter dem vordersten Fahrzeug des Fahrzeugverbunds fahrenden Fahrzeugs an die Geschwindigkeit des vordersten Fahrzeugs angepasst. So kann ein vor dem Fahrzeugverbund auf derselben Fahrspur fahrendes Vorderfahrzeug ebenfalls besonders einfach und zuverlässig bei der Regelung bzw. Steuerung der Fahrzeuggeschwindigkeit berücksichtigt werden. Bevorzugt ist dabei vorgesehen, dass der Grundmodus deaktiviert wird, wenn sich in einem definierten Nahbereich des vordersten Fahrzeugs ein auf derselben Fahrspur fahrendes, insbesondere bremsendes, Vorderfahrzeug befindet.

Vorzugsweise weist jede Regel- und/oder Steuereinrichtung eine Abstandsregeleinrichtung auf, mittels der die Geschwindigkeit des jeweiligen Fahrzeugs derart geregelt und/oder gesteuert werden kann, dass das Fahrzeug einen definierten Abstand zu einem hinter dem Fahrzeug auf derselben Fahrspur fahrenden Hinterfahrzeug und/oder zu einem vor dem Fahrzeug auf derselben Fahrspur fahrenden Vorderfahrzeug aufweist.

Bevorzugt ist dann vorgesehen, dass während des Verzögerungsschritts die Geschwindigkeit des wenigstens einen weiteren Fahrzeugs mittels der Abstandsregeleinrichtung geregelt und/oder gesteuert wird, um die Geschwindigkeit des wenigstens einen weiteren Fahrzeugs auf besonders einfache Weise zu regeln. Alternativ und/oder zusätzlich kann während des Beschleunigungsschritts die Geschwindigkeit des wenigstens hinter dem vordersten Fahrzeug fahrenden Fahrzeugs mittels der Abstandsregeleinrichtung geregelt und/oder gesteuert werden. Weiter alternativ und/oder zusätzlich kann auch, sofern der Grundmodus der Regelund/oder Steuereinrichtungen nicht aktiviert ist, die Geschwindigkeit des wenigstens einen hinter dem vordersten Fahrzeug fahrenden Fahrzeugs mittels der Abstandsregeleinrichtung geregelt und/oder gesteuert werden.

Vorzugsweise werden zur Ermittlung desjenigen Fahrzeugs des Fahrzeugverbunds, dessen Fahrzeuggeschwindigkeit sich während des Verzögerungsschritts am langsamsten verringert, die Fahrzeuge für einen definierten Zeitraum in den Zustand mit verringerter Antriebsleistung versetzt. Auf diese Weise kann das Fahrzeug des Fahrzeugverbunds, dessen Fahrzeuggeschwindigkeit sich während des Verzögerungsschritts am langsamsten verringert, einfach und zuverlässig ermittelt werden.

Zur Lösung der bereits genannten Aufgabe wird ferner eine Vorrichtung zur Unterstützung eines Fahrers eines Fahrzeugs, insbesondere eines Nutzfahrzeugs, mit den Merkmalen des Anspruchs 12 vorgeschlagen.

Die sich durch die erfindungsgemäße Vorrichtung ergebenden Vorteile sind identisch mit den bereits gewürdigten Vorteilen der erfindungsgemäßen Verfahrensführung und werden an dieser Stelle nicht wiederholt.

Des Weiteren wird auch ein Fahrzeug, insbesondere ein Nutzfahrzeug, zur Durchführung des erfindungsgemäßen Verfahrens und/oder mit der erfindungsgemäßen Vorrichtung beansprucht. Die sich hieraus ergebenden Vorteile sind ebenfalls identisch mit den bereits gewürdigten Vorteilen der erfindungsgemäßen Verfahrensführung, so dass diese hier ebenfalls nicht wiederholt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer schematischen Darstellung Fahrsituationen, bei denen das erfindungsgemäße Verfahren angewendet wird;
- Fig. 2: in einer Darstellung gemäß Fig. 1 weitere Fahrsituationen, bei denen das erfindungsgemäße Verfahren angewendet wird;
- Fig. 3: ein Diagramm, anhand dem die erfindungsgemäße Verfahrensführung erläutert wird;
- Fig. 4: ein Diagramm, anhand dem die erfindungsgemäße Verfahrensführung erläutert wird;
- Fig. 5a: ein Diagramm, anhand dem die erfindungsgemäße Verfahrensführung erläutert wird;
- Fig. 5b: ein Diagramm, anhand dem die erfindungsgemäße Verfahrensführung erläutert wird;
- Fig. 6: ein Diagramm, anhand dem die erfindungsgemäße Verfahrensführung erläutert wird;
- Fig. 7: in einer Darstellung gemäß Fig. 1 weitere Fahrsituationen, bei denen das erfindungsgemäße Verfahren angewendet wird;
- Fig. 8: in einer schematischen Darstellung den Aufbau der erfindungsgemäßen Vorrichtung;
- Fig. 9: eine Darstellung, anhand der der Ablauf der erfindungsgemäßen Verfahrensführung erläutert wird; und
- Fig. 10: Diagramme, anhand denen das erfindungsgemäße Verfahren erläutert wird.

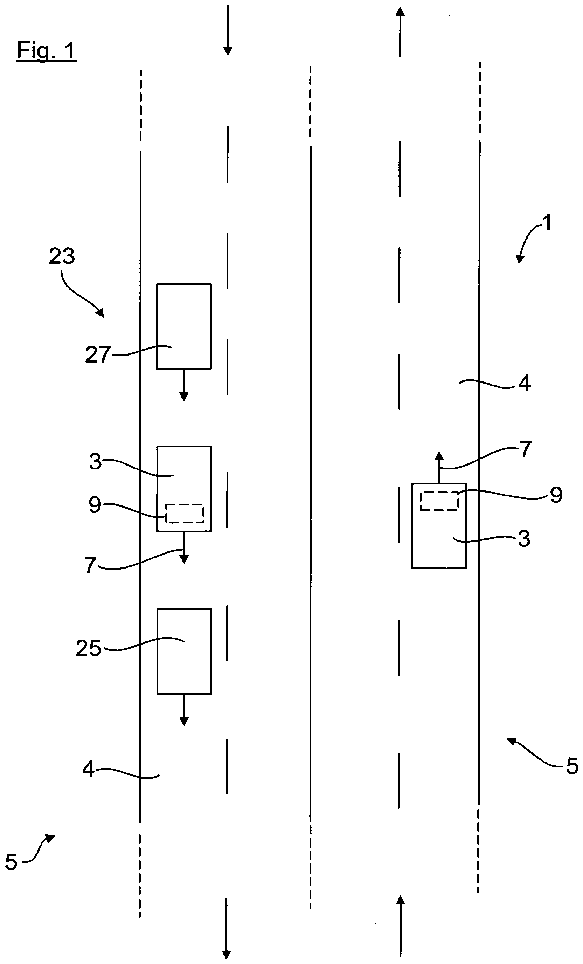

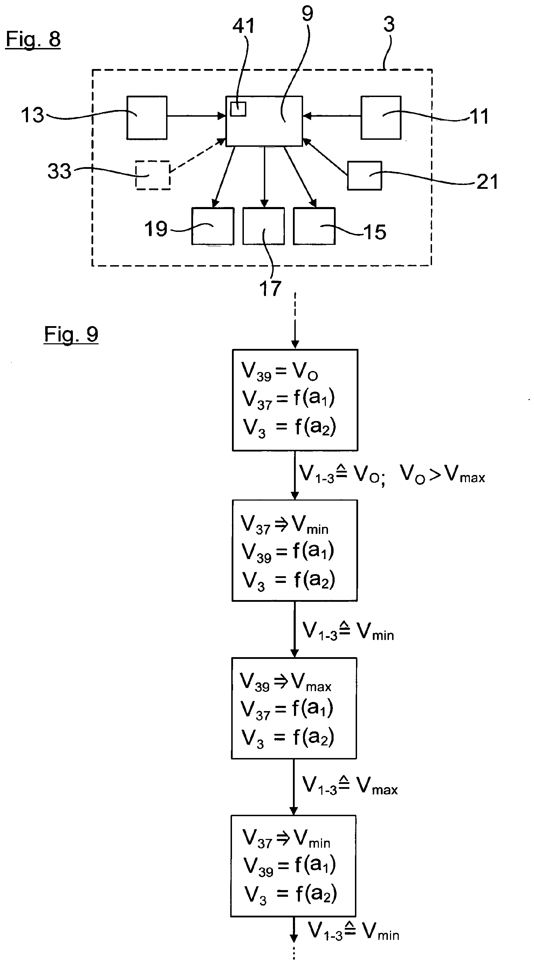

In Fig. 1 sind zwei Fahrsituationen gezeigt, in denen das erfindungsgemäße Verfahren angewendet werden kann. Bei einer ersten Fahrsituation 1 befindet sich ein Fahrzeug 3 auf einer Fahrbahn 5 und bewegt sich in Fahrtrichtung 7. Dabei befindet sich in einem definierten Nahbereich im Bereich des Fahrzeugs 3 auf einer Fahrspur 4 des Fahrzeugs 3 kein, in Fahrtrichtung 7 gesehen, vor dem Fahrzeug 3 fahrendes Vorderfahrzeug. Zudem befindet sich hier in dem definierten Nahbereich im Bereich des Fahrzeugs 1 auf der Fahrspur 4 auch kein, in Fahrtrichtung 7 gesehen, hinter dem Fahrzeug 1 fahrendes Hinterfahrzeug. Des Weiteren weist das Fahrzeug 3 eine mit gestrichelten Linien angedeutete Regel- und/oder Steuereinrichtung 9 auf, mittels der in der ersten Fahrsituation 1 die Fahrzeuggeschwindigkeit geregelt bzw. gesteuert wird. Die Funktionsweise dieser Regel- und/oder Steuereinrichtung 9 wird nachfolgend anhand von Fig. 8 näher erläutert:

Wie in Fig. 8 gezeigt ist, ist die Regel- und/öder Steuereinrichtung 9 des Fahrzeugs 3 hier beispielhaft mit einer lediglich schematisch angedeuteten ersten Verkehrserfassungseinrichtung 11 verbunden, mittels der ein Abstand des Fahrzeugs 3 zu einem hinter dem Fahrzeug 3 auf derselben Fahrspur fahrenden Hinterfahrzeug sowie die Geschwindigkeit und die Beschleunigung des Hinterfahrzeugs ermittelt werden können. Zudem ist die Regel- und/oder Steuereinrichtung 9 hier beispielhaft auch signaltechnisch mit einer zweiten Verkehrserfassungseinrichtung 13 verbunden, mittels der ein Abstand des Fahrzeugs 3 zu einem vor dem Fahrzeug 3 auf derselben Fahrspur fahrenden Vorderfahrzeug sowie die Geschwindigkeit und die Beschleunigung des Vorderfahrzeugs ermittelt werden können.

Des Weiteren ist die Regel- und/oder Steuereinrichtung 9 hier beispielhaft auch signaltechnisch mit einer hier beispielhaft als Brennkraftmaschine 15 ausgebildeten Antriebseinrichtung des Fahrzeugs 3, mit einer Kupplung 17 des Fahrzeugs 3, mittels der die Brennkraftmaschine 15 lösbar mit einer Antriebswelle des Fahrzeugs 3 verbunden werden kann, und mit einem Getriebe 19 des Fahrzeugs 3 verbunden. Auf diese Weise können die Brennkraftmaschine 15, die Kupplung 17 und das Getriebe 19 hier in Abhängigkeit von den mittels der Verkehrserfassungseinrichtungen 11, 13 ermittelten Informationen selbsttätig mittels der Regel- und/oder Steuereinrichtung 9 geregelt bzw. gesteuert werden. Zudem kann dadurch auch die Geschwindigkeit des Fahrzeugs 3 in Abhängigkeit von den mittels der Verkehrserfassungseinrichtungen 11, 13 ermittelten Informationen selbsttätig mittels der Regelund/oder Steuereinrichtung 9 geregelt bzw. gesteuert werden.

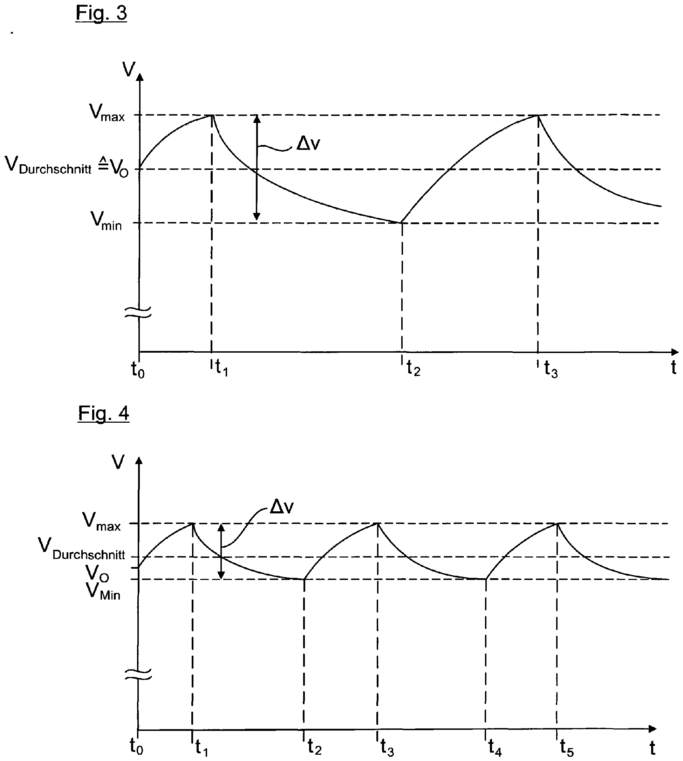

Um eine möglichst energiesparende Betriebsweise des Fahrzeugs 3 zu realisieren, wird bei der in Fig. 1 gezeigten ersten Fahrsituation 1 des Fahrzeugs 3 die Fahrzeuggeschwindigkeit gemäß dem in Fig. 3 gezeigten Diagramm mittels der Regel- und/oder Steuereinrichtung 9 selbsttätig geregelt bzw. gesteuert. Das in Fig. 3 gezeigte Diagramm weist als Abszisse eine Zeit t und als Ordinate eine Fahrzeuggeschwindigkeit v auf. Zu einem Zeitpunkt t₀ wird dabei ein Grundmodus der Regel- und/oder Steuereinrichtung 9 eingeschaltet. Das Fahrzeug 3 weist zu diesem Zeitpunkt t₀ eine Ausgangsgeschwindigkeit v₀ auf. Die Ausgangsgeschwindigkeit v₀ kann dabei beispielsweise durch eine von dem Fahrer mittels einer Einstelleinrichtung 21 (Fig. 8) eingestellte Soll-Geschwindigkeit gebildet sein, mit der sich das Fahrzeug 3 bewegen soll. Nach Einschalten des Grundmodus wird das Fahrzeug 3 hier zunächst in einem Beschleunigungsschritt bis zum Überschreiten einer Maximalgeschwindigkeit vₘₐₓ mittels der Brennkraftmaschine 15 beschleunigt. Während dieses Beschleunigungsschritts wird die Brennkraftmaschine 15 dabei derart mittels der Regel- und/oder Steuereinrichtung 9 gesteuert bzw. geregelt, dass das Fahrzeug im Wesentlichen mit maximalem Wirkungsgrad betrieben wird.

Sofern das Fahrzeug dann zu einem Zeitpunkt t₁ die definierte Maximalgeschwindigkeit vₘₐₓ überschreitet, wird in einem Verzögerungsschritt das Fahrzeug 3 bis zum Unterschreiten einer definierten, geringer als die Ausgangsgeschwindigkeit v₀ ausgebildeten Minimalgeschwindigkeit vₘᵢₙ in einen Zustand mit verringerter Antriebsleistung versetzt. Während dieses Verzögerungsschritts ist hier beispielhaft die Kupplung 17 (Fig. 8) des Fahrzeugs 3 geöffnet. Die Brennkraftmaschine 15 wird hier dann mit Leerlaufdrehzahl betrieben. Alternativ wäre es beispielsweise aber auch möglich, die Brennkraftmaschine 15 während des Verzögerungsschritts auszuschalten oder die Brennkraftmaschine 15 während des Verzögerungsschritt im Schleppbetrieb zu betreiben.

Sofern das Fahrzeug 3 dann zu einem Zeitpunkt t₂ die definierte Minimalgeschwindigkeit vₘᵢₙ unterschreitet, wird ein weiterer Beschleunigungsschritt durchgeführt. Anschließend wird wiederum ein Verzögerungsschritt durchgeführt. In dem Grundmodus werden der Bremsschritt und der Beschleunigungsschritt hier somit abwechselnd hintereinander ausgeführt. Die in Fig. 3 gezeigte Geschwindigkeitskurve verläuft hier somit sägezahnartig. Weiter weist das Fahrzeug 3 bei Durchlaufen eines einzigen Verzögerungsschritts und eines einzigen Beschleunigungsschritts eine Durchschnittsgeschwindigkeit v_{Durchschnitt} auf. Bei der in Fig. 1 gezeigten ersten Fahrsituation 1 sind die Maximalgeschwindigkeit vₘₐₓ und die Minimalgeschwindigkeit vₘᵢₙ hier derart gewählt, dass die Durchschnittsgeschwindigkeit v_{Durchschnitt} der Ausgangsgeschwindigkeit v₀ entspricht. Somit bewegt sich das Fahrzeug 3 nach Einschalten des Grundmodus im Durchschnitt weiterhin mit der Ausgangsgeschwindigkeit v₀ fort. Des Weiteren ist die Differenz Δv zwischen der Maximalgeschwindigkeit vₘₐₓ und der Minimalgeschwindigkeit vₘᵢₙ hier möglichst groß ausgebildet, da sich bei der in Fig. 1 gezeigten ersten Fahrsituation 1 kein Vorderfahrzeug und kein Hinterfahrzeug in dem definierten Nahbereich des Fahrzeugs 3 befinden. Die Differenz Δv ist hier derart gewählt, dass sie für den Fahrer des Fahrzeugs 3 noch akzeptabel ist. Bei einem als Lastkraftwagen ausgebildeten Fahrzeug 3 kann die Durchschnittsgeschwindigkeit v_{Durchschnitt} beispielsweise 85 km/h und die Differenz Δv 8 km/h betragen.

Des Weiteren ist in Fig. 1 auch eine zweite Fahrsituation 23 des Fahrzeugs 3 gezeigt. Bei dieser Fahrsituation 23 befindet sich in dem definierten Nahbereich des Fahrzeugs 3 sowohl ein vor dem Fahrzeug 3 fahrendes Vorderfahrzeug 25 als auch ein hinter dem Fahrzeug 3 fahrendes Hinterfahrzeug 27 auf der Fahrspur 4 des Fahrzeugs 3. In dem Grundmodus wird die Geschwindigkeit des Fahrzeugs 3 hier dann gemäß dem in Fig. 4 gezeigten Diagramm mittels der Regel- und/oder Steuereinrichtung 9 geregelt bzw. gesteuert. Im Vergleich zu der Geschwindigkeitsregelung gemäß Fig. 3 entspricht die Durchschnittsgeschwindigkeit v_{Durchschnitt} des Fahrzeugs 3 hier nicht der Ausgangsgeschwindigkeit v₀ des Fahrzeugs 3. Die Durchschnittsgeschwindigkeit v_{Durchschnitt} ist hier an die Geschwindigkeit des Vorderfahrzeugs 25 angepasst bzw. identisch mit der Geschwindigkeit des Vorderfahrzeugs 25. Zudem ist die Geschwindigkeitsdifferenz Δv hier geringer ausgebildet als bei der Geschwindigkeitsregelung gemäß Fig. 3. Auf diese Weise wird eine Behinderung des Hinterfahrzeugs 27 in dem Grundmodus der Regel- und/oder Steuereinrichtung 9 vermieden bzw. verringert. Konkret kann die Geschwindigkeitsdifferenz Δv hier bei einem als Lastkraftwagen ausgebildeten Fahrzeug 3 beispielsweise 4 km/h betragen.

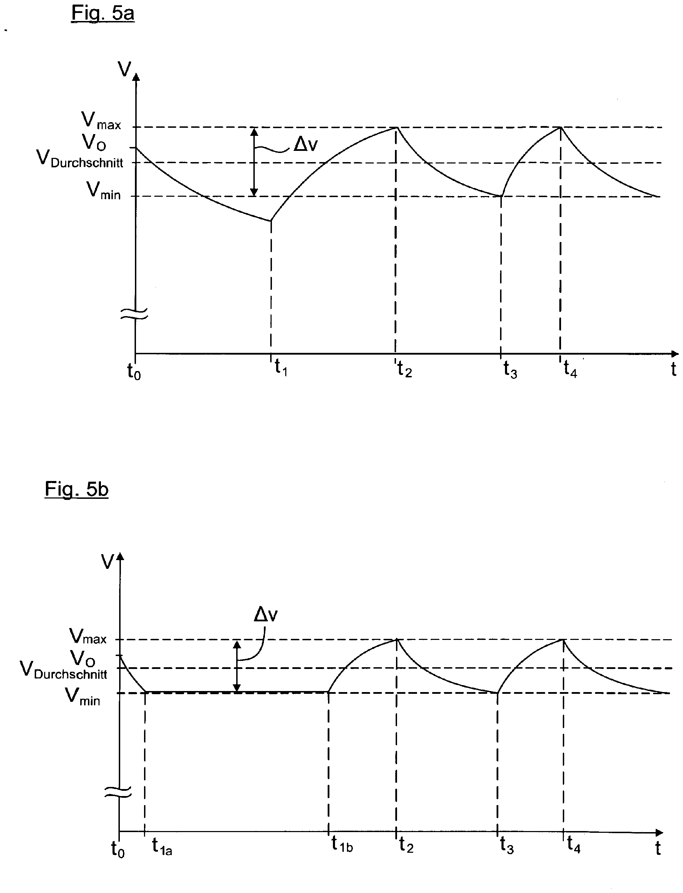

Alternativ zu der in Fig. 4 gezeigten Geschwindigkeitsregelung könnte bei der in Fig. 1 gezeigten zweiten Fahrsituation 23 auch die in Fig. 5a gezeigte Geschwindigkeitsregelung verwendet werden. Im Vergleich zu der in Fig. 4 gezeigten Geschwindigkeitsregelung wird hier vor dem ersten Beschleunigungsschritt zunächst ein Abstand-Einstellschritt durchgeführt, in dem mittels der Regel- und/oder Steuereinrichtung 9 bis zum Erreichen eines definierten Abstand-Werts die Geschwindigkeit des Fahrzeugs 1 verringert wird. Ein derartiger Abstand-Einstellschritt kann beispielsweise dann erforderlich sein, wenn zu dem Zeitpunkt t₀ ein Abstand des Fahrzeugs 3 zu dem Vorderfahrzeug 25 deutlich zu gering ist. Ansonsten entspricht die in Fig. 5a gezeigte Geschwindigkeitsregelung der in Fig. 4 gezeigten Geschwindigkeitsregelung. Alternativ zu der in Fig. 5a gezeigten Geschwindigkeitsregelung kann die Abstandsvergrößerung beispielsweise auch gemäß Fig. 5b erfolgen, um die Minimalgeschwindigkeit vₘᵢₙ nicht zu unterschreiten.

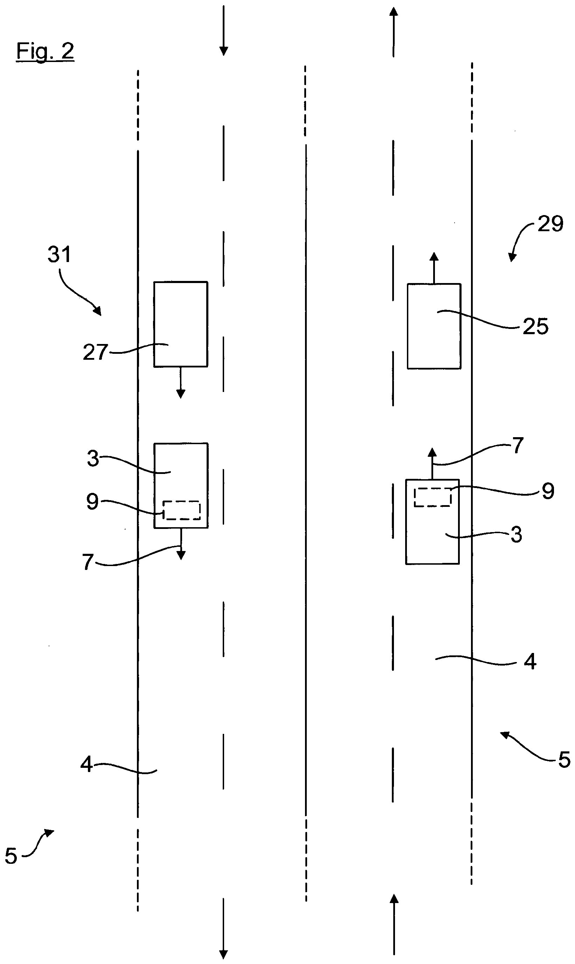

In Fig. 2 ist eine dritte Fahrsituation 29 des Fahrzeugs 3 gezeigt. In dieser Fahrsituation 29 befindet sich lediglich das Vorderfahrzeug 25 in dem definierten Nahbereich des Fahrzeugs 3 auf der Fahrspur 4. In dem Grundmodus der Regel- und/oder Steuereinrichtung 9 wird die Geschwindigkeit des Fahrzeugs 3 hier beispielhaft gemäß in Fig. 4 oder Fig. 5 gezeigten Geschwindigkeitsregelung geregelt bzw. gesteuert, mit der Ausnahme, dass die Geschwindigkeitsdifferenz Δv gemäß der in Fig. 3 gezeigten Geschwindigkeitsregelung gewählt ist.

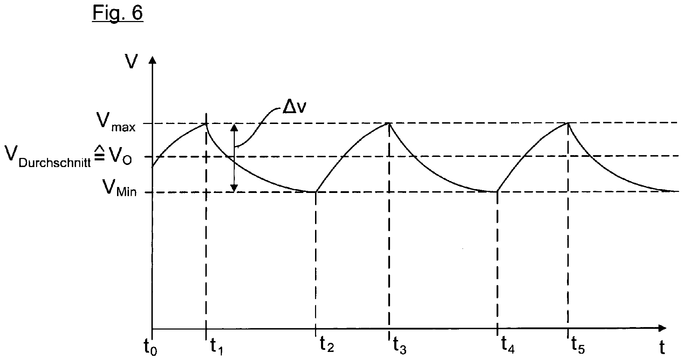

Des Weiteren ist in Fig. 2 auch eine vierte Fahrsituation 31 des Fahrzeugs 3 gezeigt. In dieser Fahrsituation 31 befindet sich lediglich das Hinterfahrzeug 27 in dem definierten Nahbereich des Fahrzeugs 3auf der Fahrspur 4. In dem Grundmodus wird die Geschwindigkeit des Fahrzeugs 3 hier beispielhaft gemäß der in Fig. 6 gezeigten Geschwindigkeitsregelung mittels der Regel- und/oder Steuereinrichtung 9 geregelt bzw. gesteuert. Im Vergleich zu der in Fig. 3 gezeigten Geschwindigkeitsregelung ist hier die Geschwindigkeitsdifferenz Δv zwischen der Maximalgeschwindigkeit vₘₐₓ und der Minimalgeschwindigkeit vₘᵢₙ verringert.

Des Weiteren werden die Maximalgeschwindigkeit vₘₐₓ und die Minimalgeschwindigkeit vₘᵢₙ hier in Abhängigkeit von den mittels der Verkehrserfassungseinrichtungen 11, 13 ermittelten Informationen selbsttätig bzw. automatisch mittels der Regel- und/oder Steuereinrichtung 9 eingestellt bzw. verstellt. Alternativ und/oder zusätzlich wäre es beispielsweise aber auch denkbar, die Maximalgeschwindigkeit vₘₐₓ und/oder die Minimalgeschwindigkeit vₘᵢₙ mittels einer in Fig. 8 mit gestrichelten Linien angedeuteten Einstelleinrichtung 33 einzustellen.

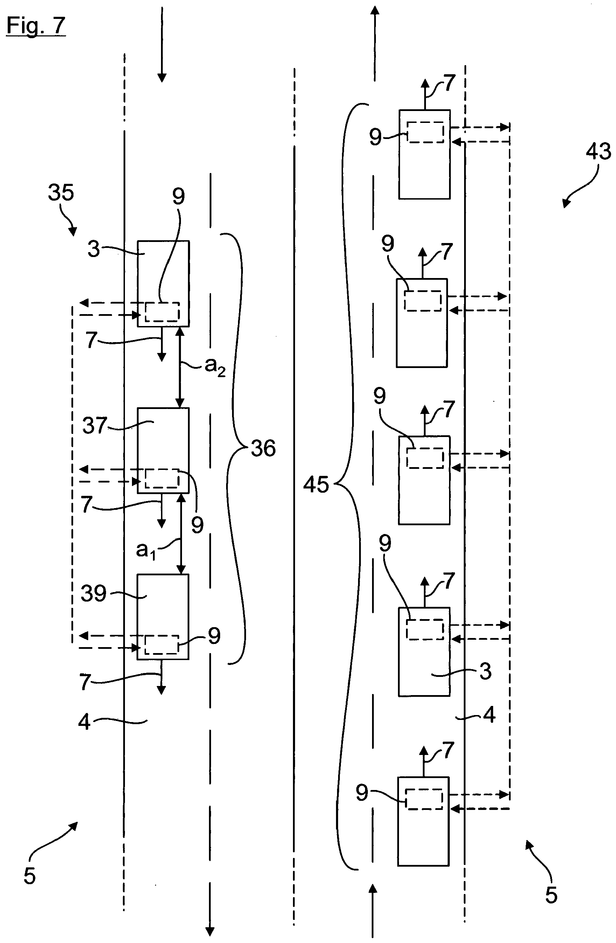

In Fig. 7 ist eine fünfte Fahrsituation 35 des Fahrzeugs 3 gezeigt. Das Fahrzeug 3 befindet sich dabei in einem Fahrzeugverbund 36 aus mehreren, hier beispielhaft drei, auf der Fahrspur 4 hintereinander fahrenden Fahrzeugen 3, 37, 39. Jedes dieser Fahrzeuge 3, 37, 39 weist die Regel- und/oder Steuereinrichtung 9 auf und bewegt sich in Fahrtrichtung 7. Die Regel- und/oder Steuereinrichtungen 9 sind hier signaltechnisch miteinander verbunden. Sofern der Grundmodus der Regel- und/oder Steuereinrichtungen 9 nicht aktiviert ist, werden die Geschwindigkeiten der hinter dem vordersten Fahrzeug 39 des Fahrzeugverbunds fahrenden Fahrzeuge 3, 37 hier mittels einer Abstandsregeleinrichtung 41 (Fig. 8) der jeweiligen Regel- und/oder Steuereinrichtung 9 geregelt bzw. gesteuert. Mittels der Abstandsregeleinrichtungen 41 können die Geschwindigkeiten der Fahrzeuge 3, 37, 39 derart geregelt bzw. gesteuert werden, dass das jeweilige Fahrzeug stets einen definierten Abstands-Wert zu einem unmittelbar vor dem Fahrzeug auf derselben Fahrspur fahrenden Vorderfahrzeug oder zu einem unmittelbar hinter dem Fahrzeug auf derselben Fahrspur fahrenden Hinterfahrzeug aufweist.

Sofern die Fahrzeuge 3, 37, 39 des Fahrzeugverbunds 36 besonders energiesparend betrieben werden sollen, wird zunächst dasjenige Fahrzeug des Fahrzeugverbunds 36 ermittelt, dessen Fahrzeuggeschwindigkeit sich während des Verzögerungsschritts am langsamsten verringert. Hierzu werden die Fahrzeuge 3, 37, 39 hier beispielhaft für einen definierten Zeitraum in den Zustand mit verringerter Antriebsleistung versetzt. Bei der in Fig. 7 gezeigten Fahrsituation 35 ist dasjenige Fahrzeug, dessen Fahrzeuggeschwindigkeit sich während des Verzögerungsschritts am langsamsten verringert, bzw. das "schnellste" Fahrzeug des Fahrzeugverbunds 36 hier beispielhaft das zwischen dem hintersten Fahrzeug 3 und dem vordersten Fahrzeug 39 fahrende Fahrzeug 37, da dieses dem geringsten Luftwiderstand ausgesetzt ist. Soll der Fahrzeugverbund 36 nun besonders energiesparend betrieben werden, schaltet die Regel- und/oder Steuereinrichtung 9 des "schnellsten" Fahrzeugs 37 selbsttätig bzw. automatisch in den Grundmodus. Während des Verzögerungsschritts werden dann die Geschwindigkeiten der weiteren Fahrzeuge 3, 39 des Fahrzeugverbunds 36 mittels der Abstandsregeleinrichtungen 41 der Fahrzeuge 3, 39 an die Geschwindigkeit des "schnellsten" Fahrzeugs 37 angepasst.

Des Weiteren schaltet hier beispielhaft die Regel- und/oder Steuereinrichtung 9 des vordersten Fahrzeugs 39 des Fahrzeugverbunds 36 spätestens nach der Durchführung des Verzögerungsschritts ebenfalls selbsttätig bzw. automatisch in den Grundmodus. Während des Beschleunigungsschritts werden dann die Geschwindigkeiten der hinter dem vordersten Fahrzeug 39 fahrenden Fahrzeuge 3, 37 mittels der Abstandsregeleinrichtungen 41 der Fahrzeuge 3, 37 an die Geschwindigkeit des vordersten Fahrzeugs 39 angepasst.

Die Geschwindigkeitsregelung der Fahrzeuge 3, 37, 39 des Fahrzeugverbunds 36 wird nachfolgend anhand von Fig. 9 nochmals zusammenfassend erläutert:
Bevor die Regel- und/oder Steuereinrichtung 9 des "schnellsten" Fahrzeugs 37 in den Grundmodus schaltet, ist die Geschwindigkeit des vordersten Fahrzeugs 39 des Fahrzeugverbunds 36 hier beispielhaft durch eine vom Fahrer des Fahrzeugs 39 mittels der Einstelleinrichtung 21 des Fahrzeugs 39 eingestellte Ausgangsgeschwindigkeit v₀ gebildet. Die Geschwindigkeiten der hinter dem vordersten Fahrzeug 39 des Fahrzeugverbunds fahrenden Fahrzeuge 3, 37 mittels der Abstandsregeleinrichtungen 41 dieser Fahrzeuge 3, 37 selbsttätig geregelt bzw. gesteuert. Die Geschwindigkeit des Fahrzeugs 37 wird dabei derart geregelt bzw. gesteuert, dass ein Abstand a₁ zwischen dem Fahrzeug 37 und dem unmittelbar vor dem Fahrzeug 37 fahrenden Fahrzeug 39 stets einen definierten Abstands-Wert aufweist. Die Geschwindigkeit des Fahrzeugs 3 wird derart geregelt bzw. gesteuert, dass auch ein Abstand a₂ zwischen dem Fahrzeug 3 und dem unmittelbar vor dem Fahrzeug 3 fahrenden Fahrzeug 37 stets den definierten Abstands-Wert aufweist.

Schaltet die Regel- und/oder Steuereinrichtung 9 des "schnellsten" Fahrzeugs 37 nun in den Grundmodus und wird zunächst der Verzögerungsschritt durchgeführt, werden die Geschwindigkeiten des vor dem "schnellsten" Fahrzeug 37 fahrenden Fahrzeugs 39 und des hinter dem "schnellsten" Fahrzeug 37 fahrenden Fahrzeugs 3 mittels der Abstandsregeleinrichtungen 41 dieser Fahrzeuge 3, 39 selbsttätig geregelt bzw. gesteuert. Die Geschwindigkeit des Fahrzeugs 39 wird dabei derart geregelt bzw. gesteuert, dass der Abstand a₁ zwischen dem Fahrzeug 39 und dem hinter dem Fahrzeug 39 fahrenden Fahrzeug 37 stets den definierten Abstands-Wert aufweist. Die Geschwindigkeit des Fahrzeugs 3 wird derart geregelt bzw. gesteuert, dass der Abstand a₂ zwischen dem Fahrzeug 3 und Fahrzeug 37 stets den definierten Abstands-Wert aufweist.

Bei einem anschließenden Beschleunigungsschritt werden dann die Geschwindigkeiten der hinter dem vordersten Fahrzeug 39 des Fahrzeugverbunds fahrenden Fahrzeuge 3, 37 mittels der Abstandsregeleinrichtungen 41 der Fahrzeuge 3, 37 selbsttätig geregelt bzw. gesteuert. Schließlich werden bei einem anschließenden Verzögerungsschritt die Geschwindigkeiten der Fahrzeuge 3, 39 mittels der Abstandsregeleinrichtungen 41 der Fahrzeuge 3, 39 selbsttätig geregelt bzw. gesteuert.

Des Weiteren ist in Fig. 7 auch eine sechste Fahrsituation 43 gezeigt. Bei dieser Fahrsituation 43 befindet sich das Fahrzeug 3 in einem Fahrzeugverbund 45. Im Vergleich zu der in Fig. 7 gezeigten fünften Fahrzeugsituation 35 besteht der Fahrzeugverbund 45 hier jedoch nicht aus drei, sondern aus fünf Fahrzeugen. Die Geschwindigkeitsregelung der Fahrzeuge des Fahrzeugverbunds 45 erfolgt hier identisch zu der Geschwindigkeitsregelung des Fahrzeugverbunds 36 gemäß der fünften Fahrsituation 35.

Weiter kann mittels der Regel- und/oder Steuereinrichtung 9 des Fahrzeugs 3 hier beispielhaft auch ein Steigungsverlauf eines vorausliegenden bzw. vor dem Fahrzeug liegenden Fahrstreckenabschnitts ermittelt werden. Bei wenigstens einer definierten vorausliegenden Steigungssituation schaltet die Regel- und/oder Steuereinrichtung 9 dann selbsttätig bzw. automatisch in einen Steigungsmodus, in dem die Fahrzeuggeschwindigkeit in Abhängigkeit von dem Steigungsverlauf selbsttätig bzw. automatisch mittels der Regel- und/oder Steuereinrichtung 9 geregelt bzw. gesteuert wird.

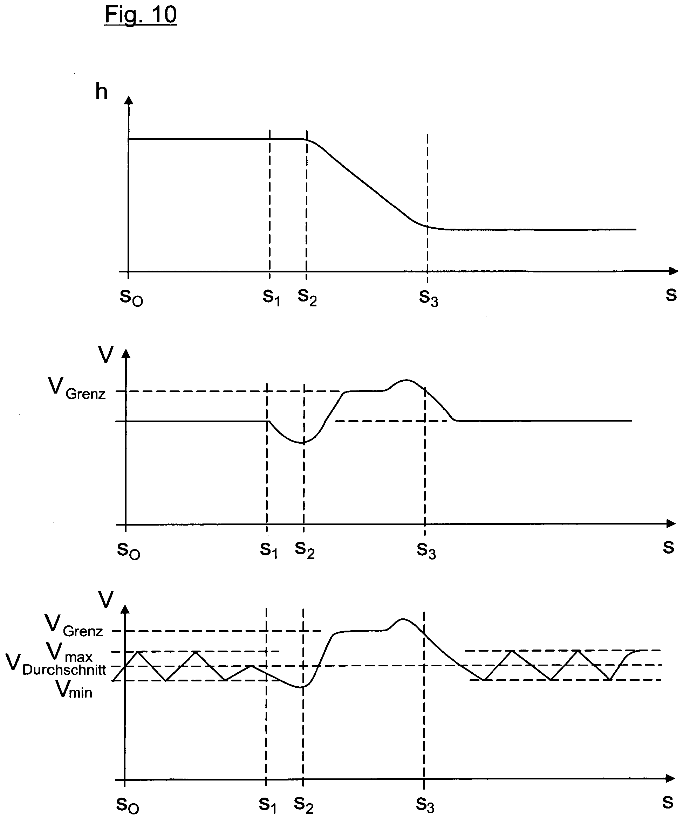

Diese Regelung bzw. Steuerung der Fahrzeuggeschwindigkeit in Abhängigkeit von dem Steigungsverlauf wird nachfolgend anhand von Fig. 10 beispielhaft erläutert:
In Fig. 10 ist ein Diagramm 47 gezeigt, in dem ein beispielhafter Höhenverlauf der Fahrbahn 4 des Fahrzeugs 3 dargestellt ist. Das Diagramm 47 weist als Abszisse eine Strecke s und als Ordinate eine Fahrstrecken-Höhe h auf. Zwischen einem Streckenpunkt s₀ und einem Streckenpunkt s₂ weist die Fahrbahn 4 hier im Wesentlichen keine Steigung bzw. eine Steigung von 0° auf. Zwischen dem Streckenpunkt s₂ und einem Streckenpunkt s₃ weist die Fahrbahn 4 ein Gefälle bzw. eine negative Steigung auf. Nach dem Streckenpunkt s₃ weist die Fahrbahn 4 wiederum keine Steigung auf.

In dem Steigungsmodus wird die Geschwindigkeit des Fahrzeugs 3 dann gemäß dem in Fig. 10 gezeigten Diagramm 49 geregelt. Dabei wird hier bereits zu einem vor dem Streckenpunkt s₂ liegenden Streckenpunkt s₁ die Antriebsleistung zum Antreiben des Fahrzeugs 3 und somit auch die Fahrzeuggeschwindigkeit verringert, um Antriebsenergie einzusparen. In dem Gefälle der Fahrstrecke 4 ist die Fahrzeuggeschwindigkeit hier auf eine Grenzgeschwindigkeit v_{Grenz} begrenzt. Bereits kurz vor dem Streckenpunkt s₃ werden die Bremsen des Fahrzeugs 3 hier gelöst, so dass das Fahrzeug 3 hier Schwung aus dem Gefälle mitnimmt. Auf diese Weise wird ein besonders energiesparender Betrieb des Fahrzeugs 3 gewährleistet. In dem in Fig. 10 gezeigten Diagramm 51 ist vor dem Streckenpunkt s₁ und nach dem Streckenpunkt s₃ der Grundmodus der Regel- und/oder Steuereinrichtung 9 des Fahrzeugs 3 aktiviert. Zwischen dem Streckenpunkt s₁ und dem Streckenpunkt s₃ ist hier der Steigungsmodus der Regel- und/oder Steuereinrichtung 9 aktiviert.

### Bezugszeichenliste

- 1: erste Fahrsituation
- 3: Fahrzeug
- 4: Fahrspur
- 5: Fahrbahn
- 7: Fahrtrichtung
- 9: Regel- und/oder Steuereinrichtung
- 11: erste Verkehrserfassungseinrichtung
- 13: zweite Verkehrserfassungseinrichtung
- 15: Brennkraftmaschine
- 17: Kupplung
- 19: Getriebe
- 21: Einstelleinrichtung
- 23: zweite Fahrsituation
- 25: Vorderfahrzeug
- 27: Hinterfahrzeug
- 29: dritte Fahrsituation
- 31: vierte Fahrsituation
- 33: Einstelleinrichtung
- 35: fünfte Fahrsituation
- 36: Fahrzeugverbund
- 37: Fahrzeug
- 39: Fahrzeug
- 41: Abstandsregeleinrichtung
- 43: sechste Fahrsituation
- 45: Fahrzeugverbund
- 47: Diagramm
- 49: Diagramm
- 51: Diagramm
- h: Höhe
- s: Strecke
- s₀: Streckenpunkt
- s₁: Streckenpunkt
- s₂: Streckenpunkt
- s₃: Streckenpunkt
- t: Zeit
- v: Fahrzeuggeschwindigkeit
- v_{Durchschnitt}: Durchschnittsgeschwindigkeit
- v_{Grenz}: Grenzgeschwindigkeit
- vₘₐₓ: Maximalgeschwindigkeit
- vₘᵢₙ: Minimalgeschwindigkeit
- v₀: Ausgangsgeschwindigkeit
- Δv: Geschwindigkeitsdifferenz

## Patentansprüche

1. Verfahren zur Unterstützung eines Fahrers eines Fahrzeugs, insbesondere eines Nutzfahrzeugs, wobei das Fahrzeug (3) mittels wenigstens einer Antriebseinrichtung (15) angetrieben wird,
wobei eine Regel- und/oder Steuereinrichtung (9) vorgesehen ist, mittels der in einem Grundmodus die Geschwindigkeit des Fahrzeugs (3) selbsttätig geregelt und/oder gesteuert wird, dergestalt,
dass, sofern das Fahrzeug (3) eine definierte Maximalgeschwindigkeit (vₘₐₓ) überschreitet, in einem Verzögerungsschritt das Fahrzeug (3) bis zum Unterschreiten einer definierten Minimalgeschwindigkeit (vₘᵢₙ), die geringer als die Maximalgeschwindigkeit (vₘₐₓ) ist, in einen Zustand mit verringerter Antriebsleistung versetzt wird,
dass, sofern das Fahrzeug (3) die definierte Minimalgeschwindigkeit (vₘᵢₙ) unterschreitet, in einem Beschleunigungsschritt das Fahrzeug (3) bis zum Überschreiten der Maximalgeschwindigkeit (vₘₐₓ) mittels der Antriebseinrichtung beschleunigt wird, wobei die Antriebseinrichtung (15) während des Beschleunigungsschritts im Wesentlichen mit maximalem Wirkungsgrad betrieben wird,
wobei die Maximalgeschwindigkeit (vₘₐₓ) in Abhängigkeit von wenigstens einem Straßenund/oder Verkehrsparameter eingestellt und/oder verstellt wird,
wobei in dem Grundmodus der Bremsschritt und der Beschleunigungsschritt abwechselnd ausgeführt werden, und wobei das Fahrzeug (3) bei Durchlaufen eines Verzögerungsschritts und eines Beschleunigungsschritts eine definierte Durchschnittgeschwindigkeit aufweist, und **dadurch gekennzeichnet,**
**dass**, sofern sich in einem definierten Nahbereich im Bereich des Fahrzeugs (3) ein vor dem Fahrzeug (3) auf derselben Fahrspur (4) fahrendes Vorderfahrzeug (25) befindet, die Maximalgeschwindigkeit (vₘₐₓ) und die Minimalgeschwindigkeit (vₘᵢₙ) derart eingestellt werden, dass die Durchschnittsgeschwindigkeit und die Geschwindigkeit des Vorderfahrzeugs (25) im Wesentlichen identisch sind.

2. Verfahren nach Anspruch 1, **dadurch gekennzeichnet, dass** während des Verzögerungsschritts die als Brennkraftmaschine ausgebildete Antriebseinrichtung (15) im Schubbetrieb betrieben wird.

3. Verfahren nach Anspruch 1, **dadurch gekennzeichnet, dass** eine Kupplungseinrichtung (17) vorgesehen ist, mittels der die Antriebseinrichtung (15) lösbar mit wenigstens einer Antriebswelle des Fahrzeugs (3) verbindbar ist, dass während des Verzögerungsschritts die Verbindung zwischen der Antriebseinrichtung (15) und der Antriebswelle gelöst ist, und dass während des Beschleunigungsschritts die Verbindung zwischen der Antriebsweinrichtung (15) und der Antriebswelle hergestellt ist.

4. Verfahren nach Anspruch 3, **dadurch gekennzeichnet, dass** während des Verzögerungsschritts die als Brennkraftmaschine ausgebildete Antriebseinrichtung (15) mit Leerlaufdrehzahl betrieben wird, und/oder dass während des Verzögerungsschritts die Antriebseinrichtung (15) ausgeschaltet wird.

5. Verfahren nach einem der vorhergehenden Ansprüche, **dadurch gekennzeichnet, dass**, sofern während des Einschaltens des Grundmodus ein Abstand des Fahrzeugs (3) zu einem unmittelbar vor dem Fahrzeug (3) auf derselben Fahrspur (4) fahrenden Vorderfahrzeug (25) geringer ist als ein definierter Abstands-Wert, zunächst ein Abstand-Einstellschritt durchgeführt wird, in dem mittels der Regel- und/oder Steuereinrichtung (9) bis zum Erreichen des definierten Abstand-Werts die Fahrzeuggeschwindigkeit selbsttätig verringert wird.

6. Verfahren nach Anspruch einem der vorhergehenden Ansprüche, **dadurch gekennzeichnet, dass**, sofern sich in einem definierten Nahbereich im Bereich des Fahrzeugs (3) kein vor dem Fahrzeug (3) auf derselben Fahrspur (4) fahrendes Vorderfahrzeug (25) befindet, die Maximalgeschwindigkeit (vₘₐₓ) und die Minimalgeschwindigkeit (vₘᵢₙ) derart eingestellt werden, dass die Durchschnittsgeschwindigkeit einer Fahrzeuggeschwindigkeit während des Einschaltens des Grundmodus und/oder einem vom Fahrer mittels einer Einstelleinrichtung (21) eingestellten Sollgeschwindigkeits-Wert entspricht.

7. Verfahren nach einem der vorhergehenden Ansprüche, **dadurch gekennzeichnet, dass**, sofern sich in einem definierten Nahbereich im Bereich des Fahrzeugs (3) ein hinter dem Fahrzeug (3) auf derselben Fahrspur (4) fahrendes Hinterfahrzeug (27) befindet, der Differenzwert (Δv) zwischen der Maximalgeschwindigkeit (vₘₐₓ) und der Minimalgeschwindigkeit (vₘᵢₙ) kleiner eingestellt wird als für den Fall, dass sich in dem definierten Nahbereich des Fahrzeugs (3) kein Hinterfahrzeug (27) befindet.

8. Verfahren nach einem der vorhergehenden Ansprüche, **dadurch gekennzeichnet, dass** die Maximalgeschwindigkeit (vₘₐₓ) und/oder die Minimalgeschwindigkeit (vₘᵢₙ) in Abhängigkeit von dem wenigstens einen Straßen- und/oder Verkehrsparameter selbsttätig mittels der Regel- und/oder Steuereinrichtung (9) eingestellt und/oder verstellt werden.

9. Verfahren nach einem der vorhergehenden Ansprüche, **dadurch gekennzeichnet, dass** eine durch den Fahrer betätigbare Einstelleinrichtung (33) vorgesehen ist, mittels der die Maximalgeschwindigkeit (vₘₐₓ) und/oder die Minimalgeschwindigkeit (vₘᵢₙ) und/oder ein Differenzwert (Δv) zwischen der Maximalgeschwindigkeit (vₘₐₓ) und der Minimalgeschwindigkeit (vₘᵢₙ) einstellbar sind.

10. Verfahren nach einem der vorhergehenden Ansprüche, **dadurch gekennzeichnet, dass** sich das Fahrzeug (3) in einem Fahrzeugverbund (36, 45) aus mehreren auf einer Fahrspur (4) hintereinander fahrenden Fahrzeugen (3, 37, 39) befindet,
wobei jedes dieser Fahrzeuge (3, 37, 39) die Regel- und/oder Steuereinrichtung (9) aufweist und diese Regel- und/oder Steuereinrichtungen (9) signaltechnisch miteinander verbunden sind,
wobei dasjenige Fahrzeug des Fahrzeugverbunds (36, 45) ermittelt wird, dessen Fahrzeuggeschwindigkeit sich während des Verzögerungsschritts am langsamsten verringert,
wobei die Regel- und/oder Steuereinrichtung (9) desjenigen Fahrzeugs (37) des Fahrzeugverbunds (36, 45), dessen Fahrzeuggeschwindigkeit sich während des Verzögerungsschritts am langsamsten verringert, selbsttätig in den Grundmodus schaltet, und
wobei während des Verzögerungsschritts die Geschwindigkeit des wenigstens einen weiteren Fahrzeugs (3, 39) des Fahrzeugverbunds (36, 45) an die Geschwindigkeit des Fahrzeugs (37) mit der in den Grundmodus geschalteten Regel- und/oder Steuereinrichtung (9) angepasst wird.

11. Verfahren nach Anspruch 10, **dadurch gekennzeichnet, dass** die Regel- und/oder Steuereinrichtung (9) des vordersten Fahrzeugs (39) des Fahrzeugverbunds (36, 45) spätestens nach der Durchführung des Verzögerungsschritts ebenfalls selbsttätig in den Grundmodus schaltet, und dass während des Beschleunigungsschritts die Geschwindigkeit des wenigstens einen hinter dem vordersten Fahrzeug (39) fahrenden Fahrzeugs (3, 37) an die Geschwindigkeit des vordersten Fahrzeugs (29) angepasst wird.

12. Vorrichtung zur Unterstützung eines Fahrers eines Fahrzeugs, insbesondere eines Nutzfahrzeugs, zur Durchführung eines Verfahrens nach einem der vorhergehenden Ansprüche, wobei das Fahrzeug (3) mittels wenigstens einer Antriebseinrichtung (15) antreibbar ist,
wobei eine Regel- und/oder Steuereinrichtung (9) vorgesehen ist, mittels der in einem Grundmodus das Fahrzeug (3) selbsttätig regelbar und/oder steuerbar ist, dergestalt,
dass, sofern das Fahrzeug (3) eine definierte Maximalgeschwindigkeit (vₘₐₓ) überschreitet, in einem Verzögerungsschritt das Fahrzeug (3) bis zum Unterschreiten einer definierten Minimalgeschwindigkeit (vₘᵢₙ), die geringer als die Maximalgeschwindigkeit (vₘₐₓ) ist, in einen Zustand mit verringerter Antriebsleistung versetzt wird,
dass, sofern das Fahrzeug (3) die definierte Minimalgeschwindigkeit (vₘᵢₙ) unterschreitet, in einem Beschleunigungsschritt das Fahrzeug (3) bis zum Überschreiten der Maximalgeschwindigkeit (vₘₐₓ) mittels der Antriebseinrichtung (15) beschleunigt wird, wobei die Antriebseinrichtung (15) während des Beschleunigungsschritts im Wesentlichen mit maximalem Wirkungsgrad betrieben wird, wobei die Maximalgeschwindigkeit (vₘₐₓ) in Abhängigkeit von wenigstens einem Straßen- und/oder Verkehrsparameter einstellbar und/oder verstellbar ist,
wobei in dem Grundmodus der Bremsschritt und der Beschleunigungsschritt abwechselnd ausgeführt werden, und wobei das Fahrzeug (3) bei Durchlaufen eines Verzögerungsschritts und eines Beschleunigungsschritts eine definierte Durchschnittgeschwindigkeit aufweist, und **dadurch gekennzeichnet,**
**dass**, sofern sich in einem definierten Nahbereich im Bereich des Fahrzeugs (3) ein vor dem Fahrzeug (3) auf derselben Fahrspur (4) fahrendes Vorderfahrzeug (25) befindet, die Maximalgeschwindigkeit (vₘₐₓ) und die Minimalgeschwindigkeit (vₘᵢₙ) derart eingestellt werden, dass die Durchschnittsgeschwindigkeit und die Geschwindigkeit des Vorderfahrzeugs (25) im Wesentlichen identisch sind.

13. Fahrzeug, insbesondere Nutzfahrzeug, mit der Vorrichtung nach Anspruch 12.

## Claims

1. Method for assisting a driver of a vehicle, particularly a commercial vehicle, wherein the vehicle (3) is driven by means of at least one drive device (15),
wherein a regulatory and/or control device (9) is provided, by means of which, in a basic mode, the velocity of the vehicle (3) is spontaneously regulated and/or controlled such
that, provided that the vehicle (3) exceeds a defined maximum velocity (vₘₐₓ), the vehicle (3) is put into a state with decreased drive power in a deceleration step until it drops below a defined minimum velocity (vₘᵢₙ), which is lower than the maximum velocity (vₘₐₓ),
that, provided that the vehicle (3) drops below the defined minimum velocity (vₘᵢₙ), the vehicle (3) is accelerated by means of the drive device in an acceleration step until it exceeds the maximum velocity (vₘₐₓ), wherein the drive device (15) is operated essentially at maximum efficiency during the acceleration step,
wherein the maximum velocity (vₘₐₓ) is set and/or adjusted on the basis of at least one road and/or traffic parameter,
wherein, in the basic mode, the braking step and the acceleration step are carried out alternately, and wherein the vehicle (3) has a defined average velocity when a deceleration step and an acceleration step are performed, and **characterized**
**in that**, provided that there is a vehicle in front (25) travelling in the same lane (4) ahead of the vehicle (3) in a defined close range in the region of the vehicle (3), the maximum velocity (vₘₐₓ) and the minimum velocity (vₘᵢₙ) are set such that the average velocity and the velocity of the vehicle in front (25) are essentially identical.

2. Method according to Claim 1, **characterized in that**, during the deceleration step, the drive device (15) in the form of an internal combustion engine is operated in overrun mode.

3. Method according to Claim 1, **characterized in that** a clutch device (17) is provided, by means of which the drive device (15) is detachably connectable to at least one drive shaft of the vehicle (3), **in that**, during the deceleration step, the connection between the drive device (15) and the drive shaft is broken and **in that**, during the acceleration step, the connection between the drive device (15) and the drive shaft is made.

4. Method according to Claim 3, **characterized in that**, during the deceleration step, the drive device (15) in the form of an internal combustion engine is operated at idling speed and/or **in that**, during the deceleration step, the drive device (15) is switched off.

5. Method according to one of the preceding claims, **characterized in that**, provided that, while the basic mode is being switched on, a distance of the vehicle (3) from a vehicle in front (25) travelling in the same lane (4) directly ahead of the vehicle (3) is below a defined distance value, a distance adjustment step is first of all performed in which the regulatory and/or control device (9) is used to spontaneously decrease the vehicle velocity until the defined distance value is reached.

6. Method according to one of the preceding claims, **characterized in that**, provided that there is no vehicle in front (25) travelling in the same lane (4) ahead of the vehicle (3) in a defined close range in the region of the vehicle (3), the maximum velocity (vₘₐₓ) and the minimum velocity (vₘᵢₙ) are set such that the average velocity corresponds to a vehicle velocity while the basic mode is switched on and/or to a setpoint velocity value that is set by the driver by means of an adjusting device (21).

7. Method according to one of the preceding claims, **characterized in that**, provided that there is a vehicle behind (27) travelling in the same lane (4) behind the vehicle (3) in a defined close range in the region of the vehicle (3), the difference value (Δv) between the maximum velocity (vₘₐₓ) and the minimum velocity (vₘᵢₙ) is set lower than for the case in which there is no vehicle behind (27) in the defined close range of the vehicle (3).

8. Method according to one of the preceding claims, **characterized in that** the maximum velocity (vₘₐₓ) and/or the minimum velocity (vₘᵢₙ) is or are set and/or adjusted spontaneously by means of the regulatory and/or control device (9) on the basis of the at least one road and/or traffic parameter.

9. Method according to one of the preceding claims, **characterized in that** an adjusting device (33) that can be operated by the driver is provided, by means of which the maximum velocity (vₘₐₓ) and/or the minimum velocity (vₘᵢₙ) and/or a difference value (Δv) between the maximum velocity (vₘₐₓ) and the minimum velocity (vₘᵢₙ) are settable.

10. Method according to one of the preceding claims, **characterized in that** the vehicle (3) is situated in a vehicle cluster (36, 45) comprising multiple vehicles (3, 37, 39) travelling behind one another in a lane (4),
wherein each of these vehicles (3, 37, 39) has the regulatory and/or control device (9) and these regulatory and/or control devices (9) are connected to one another for signalling purposes,
wherein that vehicle in the vehicle cluster (36, 45) whose vehicle velocity decreases most slowly during the deceleration step is identified,
wherein the regulatory and/or control device (9) of that vehicle (37) in the vehicle cluster (36, 45) whose vehicle velocity decreases most slowly during the deceleration step spontaneously switches to the basic mode, and
wherein, during the deceleration step, the velocity of the at least one further vehicle (3, 39) in the vehicle cluster (36, 45) is matched to the velocity of the vehicle (37) having the regulatory and/or control device (9) switched to the basic mode.

11. Method according to Claim 10, **characterized in that** the regulatory and/or control device (9) of the front vehicle (39) in the vehicle cluster (36, 45) likewise spontaneously switches to the basic mode no later than after the deceleration step is performed, and **in that**, during the acceleration step, the velocity of the at least one vehicle (3, 37) travelling behind the front vehicle (39) is matched to the velocity of the front vehicle (29).

12. Apparatus for assisting a driver of a vehicle, particularly a commercial vehicle, for performing a method according to one of the preceding claims, wherein the vehicle (3) can be driven by means of at least one drive device (15),
wherein a regulatory and/or control device (9) is provided, by means of which, in a basic mode, the vehicle (3) can be spontaneously regulated and/or controlled such
that, provided that the vehicle (3) exceeds a defined maximum velocity (vₘₐₓ), the vehicle (3) is put into a state with decreased drive power in a deceleration step until it drops below a defined minimum velocity (vₘᵢₙ), which is lower than the maximum velocity (vₘₐₓ),
that, provided that the vehicle (3) drops below the defined minimum velocity (vₘᵢₙ), the vehicle (3) is accelerated by means of the drive device (15) in an acceleration step until it exceeds the maximum velocity (vₘₐₓ), wherein the drive device (15) is operated essentially at maximum efficiency during the acceleration step, wherein the maximum velocity (vₘₐₓ) can be set and/or adjusted on the basis of at least one road and/or traffic parameter,
wherein, in the basic mode, the braking step and the acceleration step are carried out alternately, and wherein the vehicle (3) has a defined average velocity when a deceleration step and an acceleration step are performed, and **characterized**
**in that**, provided that there is a vehicle in front (25) travelling in the same lane (4) ahead of the vehicle (3) in a defined close range in the region of the vehicle (3), the maximum velocity (vₘₐₓ) and the minimum velocity (vₘᵢₙ) are set such that the average velocity and the velocity of the vehicle in front (25) are essentially identical.

13. Vehicle, particularly a commercial vehicle, having the apparatus according to Claim 12.

## Revendications

1. Procédé d'assistance d'un conducteur d'un véhicule, notamment d'un véhicule utilitaire, le véhicule (3) étant entraîné au moyen d'au moins un dispositif d'entraînement (15),
un dispositif de régulation et/ou de commande (9) étant présent, au moyen duquel, dans un mode de base, la vitesse du véhicule (3) est régulée et/ou commandée automatiquement, de telle sorte
que dans la mesure où le véhicule (3) dépasse une vitesse maximale (vₘₐₓ) définie, dans une étape de ralentissement, le véhicule (3) est placé dans un état avec une puissance d'entraînement réduite jusqu'à franchir vers le bas une vitesse minimale (vₘᵢₙ) définie, laquelle est inférieure à la vitesse maximale (vₘₐₓ),
que dans la mesure où le véhicule (3) franchit vers le bas la vitesse minimale (vₘᵢₙ) définie, dans une étape d'accélération, le véhicule (3) est accéléré au moyen du dispositif d'accélération jusqu'à dépasser la vitesse maximale (vₘₐₓ), le dispositif d'entraînement (15) fonctionnant sensiblement avec un niveau de rendement maximal pendant l'étape d'accélération,
la vitesse maximale (vₘₐₓ) étant réglée et/ou ajustée en fonction d'au moins un paramètre de route et/ou de circulation,
l'étape de freinage et l'étape d'accélération étant exécutées en alternance dans le mode de base, et le véhicule (3) présentant une vitesse moyenne définie lors du franchissement d'une étape de ralentissement et d'une étape d'accélération, et **caractérisé en ce**
**que** dans la mesure où un véhicule à l'avant (25) qui circule devant le véhicule (3) sur la même voie de circulation (4) se trouve dans une zone de proximité définie dans la zone du véhicule (3), la vitesse maximale (vₘₐₓ) et la vitesse minimale (vₘᵢₙ) sont réglées de telle sorte que la vitesse moyenne et la vitesse du véhicule à l'avant (25) sont sensiblement identiques.

2. Procédé selon la revendication 1, **caractérisé en ce que** pendant l'étape de ralentissement, le dispositif d'entraînement (15), réalisé sous la forme d'un moteur à combustion interne, fonctionne en mode de poussée.

3. Procédé selon la revendication 1, **caractérisé en ce qu'**un dispositif d'accouplement (17) est présent, au moyen duquel le dispositif d'entraînement (15) peut être relié de manière amovible à au moins un arbre d'entraînement du véhicule (3), **en ce que** pendant l'étape de ralentissement, la liaison entre le dispositif d'entraînement (15) et l'arbre d'entraînement est rompue, et **en ce que** pendant l'étape d'accélération, la liaison entre le dispositif d'entraînement (15) et l'arbre d'entraînement est établie.

4. Procédé selon la revendication 3, **caractérisé en ce que** pendant l'étape de ralentissement, le dispositif d'entraînement (15) réalisé sous la forme d'un moteur à combustion interne fonctionne au régime de ralenti et/ou **en ce que** pendant l'étape de ralentissement, le dispositif d'entraînement (15) est désactivé.

5. Procédé selon l'une des revendications précédentes, **caractérisé en ce que** dans la mesure où pendant l'activation du mode de base, un écart entre le véhicule (3) et un véhicule à l'avant (25) qui circule directement devant le véhicule (3) sur la même voie de circulation (4) est inférieur à une valeur d'écart définie, une étape de réglage de l'écart est tout d'abord exécutée, dans laquelle la vitesse du véhicule est réduite automatiquement au moyen du dispositif de régulation et/ou de commande (9) jusqu'à atteindre la valeur d'écart définie.

6. Procédé selon l'une des revendications précédentes, **caractérisé en ce que** dans la mesure où aucun véhicule à l'avant (25) qui circule devant le véhicule (3) sur la même voie de circulation (4) ne se trouve dans une zone de proximité définie dans la zone du véhicule (3), la vitesse maximale (vₘₐₓ) et la vitesse minimale (vₘᵢₙ) sont réglées de telle sorte que la vitesse moyenne correspond à une vitesse du véhicule pendant l'activation du mode de base et/ou à une valeur de vitesse de consigne réglée par le conducteur au moyen d'un dispositif de réglage (21).

7. Procédé selon l'une des revendications précédentes, **caractérisé en ce que** dans la mesure où un véhicule à l'arrière (27) qui circule derrière le véhicule (3) sur la même voie de circulation (4) se trouve dans une zone de proximité définie dans la zone du véhicule (3), la valeur de différence (Δv) entre la vitesse maximale (vₘₐₓ) et la vitesse minimale (vₘᵢₙ) est réglée plus faible que dans le cas où aucun véhicule à l'arrière (27) ne se trouve dans la zone de proximité définie du véhicule (3).

8. Procédé selon l'une des revendications précédentes, **caractérisé en ce que** la vitesse maximale (vₘₐₓ) et/ou la vitesse minimale (vₘᵢₙ) sont réglées et/ou ajustées automatiquement en fonction de l'au moins un paramètre de route et/ou de circulation au moyen du dispositif de régulation et/ou de commande (9).

9. Procédé selon l'une des revendications précédentes, **caractérisé en ce qu'**un dispositif de réglage (33) pouvant être actionné par le conducteur est présent, au moyen duquel la vitesse maximale (vₘₐₓ) et/ou la vitesse minimale (vₘᵢₙ) et/ou une valeur de différence (Δv) entre la vitesse maximale (vₘₐₓ) et la vitesse minimale (vₘᵢₙ) sont réglables.

10. Procédé selon l'une des revendications précédentes, **caractérisé en ce que** le véhicule (3) se trouve dans un train de véhicules (36, 45) composé de plusieurs véhicules (3, 37, 39) circulant les uns derrière les autres sur une voie de circulation (4),
chacun de ces véhicules (3, 37, 39) possédant le dispositif de régulation et/ou de commande (9) et ces dispositifs de régulation et/ou de commande (9) étant reliés signalétiquement entre eux,
le véhicule du train de véhicules (36, 45) dont la vitesse de déplacement diminue le plus lentement pendant l'étape de ralentissement étant déterminé,
le dispositif de régulation et/ou de commande (9) du véhicule (37) du train de véhicules (36, 45) dont la vitesse de déplacement diminue le plus lentement pendant l'étape de ralentissement passant automatiquement dans le mode de base, et
pendant l'étape de ralentissement, la vitesse de l'au moins un véhicule supplémentaire (3, 39) du train de véhicules (36, 45) étant adaptée à la vitesse du véhicule (37) dont le dispositif de régulation et/ou de commande (9) est passé dans le mode de base.

11. Procédé selon la revendication 10, **caractérisé en ce que** le dispositif de régulation et/ou de commande (9) du véhicule le plus à l'avant (39) du train de véhicules (36, 45) passe aussi automatiquement dans le mode de base au plus tard après avoir exécuté l'étape de ralentissement, et **en ce que** pendant l'étape d'accélération, la vitesse de l'au moins un véhicule (3, 37) qui circule derrière le véhicule le plus à l'avant (39) est adaptée à la vitesse du véhicule le plus à l'avant (29).

12. Arrangement d'assistance d'un conducteur d'un véhicule, notamment d'un véhicule utilitaire, pour le mise en oeuvre d'un procédé selon l'une des revendications précédentes, le véhicule (3) pouvant être entraîné au moyen d'au moins un dispositif d'entraînement (15),
un dispositif de régulation et/ou de commande (9) étant présent, au moyen duquel, dans un mode de base, le véhicule (3) peut être régulé et/ou commandé automatiquement, de telle sorte
que dans la mesure où le véhicule (3) dépasse une vitesse maximale (vₘₐₓ) définie, dans une étape de ralentissement, le véhicule (3) est placé dans un état avec une puissance d'entraînement réduite jusqu'à franchir vers le bas une vitesse minimale (vₘᵢₙ) définie, laquelle est inférieure à la vitesse maximale (vₘₐₓ),
que dans la mesure où le véhicule (3) franchit vers le bas la vitesse minimale (vₘᵢₙ) définie, dans une étape d'accélération, le véhicule (3) est accéléré au moyen du dispositif d'accélération (15) jusqu'à dépasser la vitesse maximale (vₘₐₓ), le dispositif d'entraînement (15) fonctionnant sensiblement avec un niveau de rendement maximal pendant l'étape d'accélération, la vitesse maximale (vₘₐₓ) pouvant être réglée et/ou ajustée en fonction d'au moins un paramètre de route et/ou de circulation,
l'étape de freinage et l'étape d'accélération étant exécutées en alternance dans le mode de base, et le véhicule (3) présentant une vitesse moyenne définie lors du franchissement d'une étape de ralentissement et d'une étape d'accélération, et **caractérisé en ce**
**que** dans la mesure où un véhicule à l'avant (25) qui circule devant le véhicule (3) sur la même voie de circulation (4) se trouve dans une zone de proximité définie dans la zone du véhicule (3), la vitesse maximale (vₘₐₓ) et la vitesse minimale (vₘᵢₙ) sont réglées de telle sorte que la vitesse moyenne et la vitesse du véhicule à l'avant (25) sont sensiblement identiques.

13. Véhicule, notamment véhicule utilitaire, comprenant l'arrangement selon la revendication 12.
